(19) Europäisches Patentamt
European Patent Office
Office européen des brevets

(11) EP 2 368 922 B1

(12) **EUROPEAN PATENT SPECIFICATION**

(45) Date of publication and mention
of the grant of the patent:
**13.03.2013 Bulletin 2013/11**

(51) Int Cl.:
*C08F 210/06* [(2006.01)]    *C08K 3/00* [(2006.01)]
*C08L 23/10* [(2006.01)]    *F16L 9/12* [(2006.01)]
*C08L 23/12* [(2006.01)]    *F16L 9/127* [(2006.01)]

(21) Application number: **10157200.6**

(22) Date of filing: **22.03.2010**

(54) **High modulus polypropylene composition for pipe applications**

Composition de polypropylène à haut module pour applications de tuyaux

Hochmodule Polypropylenzusammensetzung für Rohranwendungen

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**28.09.2011 Bulletin 2011/39**

(73) Proprietor: **Borealis AG**
**1220 Vienna (AT)**

(72) Inventors:
• **Liu, Yi**
**4020 Linz (AT)**
• **Schiesser,Stefan**
**4030 Linz (AT)**

• **Sundholm, Tua**
**4020 Linz (AT)**
• **Ruemer, Franz**
**4222 St. Georgen/Gusen (AT)**

(74) Representative: **Haggenmüller, Christian et al**
**Maiwald Patentanwalts GmbH**
**Elisenhof**
**Elisenstraße 3**
**80335 München (DE)**

(56) References cited:
**EP-A1- 1 632 529**    **EP-A1- 1 746 128**
**EP-A1- 1 801 156**    **EP-A1- 2 145 923**
**EP-A2- 0 808 870**    **WO-A1-2005/014713**
**WO-A2-2006/114358**

**Description**

The present invention relates to a polymer composition having an improved balance between stiffness and impact properties which is useful for the preparation of pipes.

Pipes made of polymeric materials are frequently used for various purposes, such as fluid transport, i.e. transport of gases or liquids. The fluid may be pressurised such as when transporting natural gas or tap water, or non-pressurised such as when transporting sewage (wastewater), drainage (land and road drainage), for storm water applications or for indoor soil and waste. Moreover, the transported fluid may have varying temperatures, usually within the temperature range of from about 0°C to about 50°C. Pressureless (non-pressure) pipes may also be used for cable and pipe protection. Such non-pressure pipes are herein also referred to as sewage pipes or non-pressure sewage pipes.

The term "pipe" as used herein is meant to comprise pipes in a broader sense, as well as supplementary parts like fittings, valves, chambers and all parts which are commonly necessary for e.g. a sewage piping system. It also comprises single or multilayer pipes, where for example one or more of the layers is a metal layer and which may include an adhesive layer. Structural-wall pipes, such as corrugated pipes, double-wall pipes with or without hollow sections, are also encompassed by the term "pipe".

Different requirements are imposed on pipes for the transport of pressurised fluids (so-called pressure pipes) and pipes for the transport of non-pressurised fluids such as sewage (so-called non-pressure pipes). While pressure pipes must be able to withstand an internal positive pressure, i.e. a pressure inside the pipe that is higher than the pressure outside the pipe, non-pressure pipes do not have to withstand any internal positive pressure, but are instead required to withstand an external positive pressure, i.e. the pressure outside the pipe is higher than the pressure inside the pipe. This higher outside pressure may be due to the earth load on the pipe when submerged in the soil, the groundwater pressure, traffic load, or clamping forces in indoor applications.

Non-pressure pipes such as sewage pipes are made in a variety of dimensions from about 0.1 to about 3 m of inner diameter and of a variety of materials such as ceramics (vitrified clay mainly), concrete, polyvinyl chloride (PVC), polyethylene (PE), and polypropylene (PP). While ceramics and concrete are low-cost materials, they are unfortunately heavy and brittle. There has therefore been a trend during recent years to replace sewage pipes of ceramics or concrete with pipes of polymer materials such as PVC, PE or PP.

Because of its good processability at low production costs and high mechanical performance, PVC is one of the most dominant materials used for pipes and fittings.

In the non-pressure pipe application area, high stiffness is a highly desirable property making it possible to

-    either produce pipes with thinner walls but with the same ring stiffness,
-    or produce pipes having a very high ring stiffness.

PVC-based materials show high stiffness, as indicated by high tensile modulus values, e.g. in the range of 2700 to 3000 MPa. Thus, if polypropylene is used as a substitute for PVC in non-pressure pipe applications, it would be desirable to accomplish stiffness values comparable to those of PVC materials.

Polypropylene copolymers for pipe manufacturing are today offered with stiffness up to 1800 MPa. On the other hand, PP has advantages over PVC in other respects, e.g. by having a lower density and thus a lower weight per metre pipe, having superior high and low temperature properties, and being weldable.

In addition to high stiffness, polymers used for non-pressure pipes should have high impact strength, i.e. a high ability to withstand shock loading. Pipes may be installed at temperatures below 0°C, hence good impact properties at low temperatures is required

However, as stiffness and impact strength are conflicting properties, it remains difficult to increase tensile modulus of a PP pipe material while still keeping the impact strength on an acceptable level, or *vice versa.*

EP 1 632 529 A1 discloses a heterophasic polypropylene composition comprising a propylene homopolymer and an elastomeric propylene copolymer dispersed therein. The heterophasic polypropylene has a comonomer content of 2 to 7 wt%, a melt flow rate MFR(230°C, 2.16 kg) of 0.1 to 2.0 g/10 min, and a broad molecular weight distribution. The heterophasic polypropylene composition is useful for the preparation of a pressureless pipe. However, considering the Examples of EP 1 632 529 A1, stiffness values are significantly below 2700 MPa, i.e. clearly below stiffness values obtainable with PVC materials.

EP 2 145 923 A1 discloses a heterophasic polypropylene composition which comprises (i) a matrix comprising a propylene homopolymer and/or a propylene copolymer having an amount of comonomer units of less than 1.0 wt%, and (ii) an elastomeric polypropylene which is dispersed within the matrix and comprises comonomer units derived from ethylene and/or a $C_{4-8}$ alpha-olefin; and wherein the heterophasic polymer composition has an amorphous fraction AM in an amount of 2.0 to 7.5 wt%. Considering the Examples of EP 2 145 923 A1, stiffness values are significantly below 2700 MPa, i.e. clearly below stiffness values obtainable with PVC materials.

WO 2005/014713 discloses a heterophasic polyolefin composition comprising a matrix made of a propylene homopolymer or a propylene random copolymer, and an elastomeric phase dispersed in the matrix which has an ethylene content ranging from 15 to 85 wt% and an intrinsic viscosity of at least 1.4 g/ml. Considering the Examples of WO 2005/014713, stiffness values are significantly below 2700 MPa, i.e. clearly below stiffness values obtainable with PVC materials.

It is known that stiffness of polypropylene can be increased by adding fillers such as talc or calcium carbonate. On the other hand, if higher amounts of filler materials are added, e.g. 5 wt% or even more, there is also a significant decrease in impact properties and long term properties, like pressure resistance.

WO 2006/114358 A2 discloses a pipe made from a polymer composition comprising (A) a heterophasic polyolefin composition comprising a matrix made of a propylene homopolymer or a propylene random copolymer, and an elastomeric phase dispersed in the matrix which has an ethylene content ranging from 15 to 85 wt% and an intrinsic viscosity of at least 1.4 g/ml; and (B) 10-35 wt% of at least one filler selected from calcium carbonate, talc, wollastonite, or mixtures thereof. Considering the Examples of WO 2005/014713, stiffness values are significantly below 2700 MPa, i.e. clearly below stiffness values obtainable with PVC materials.

Considering the statements outlined above, it is an object of the present invention to provide a polypropylene composition which is useful for the preparation of non-pressure pipes and has stiffness values comparable to those of PVC based materials, e.g. close to 2700 MPa or even higher, while simultaneously providing an improved balance between stiffness and impact properties.

According to a first aspect of the present invention, the object outlined above is solved by providing a polymer composition, comprising

(a) a heterophasic polymer which comprises

(a1) a matrix comprising a propylene homopolymer and/or a propylene copolymer having an amount of comonomer units of less than 1.0 wt%, the matrix having a polydispersity index PI of 6 or less,
(a2) an elastomeric polypropylene which is dispersed within the matrix and comprises comonomer units derived from ethylene and/or a $C_{4-8}$ alpha-olefin,

the heterophasic polymer composition having an amorphous fraction AM in an amount of 2.0 to 7.5 wt%, and the amorphous fraction AM having an amount of ethylene- and/or $C_{4-8}$ alpha-olefin-derived comonomer units of 20 to 45 wt%;
(b) talc in an amount of from 5-40%.

The present invention is based on the finding that by adding talc in the specified amount to a heterophasic polypropylene as specified above, a drastic increase of stiffness to values comparable to those of PVC-based materials can be achieved while simultaneously the decrease in impact strength is still acceptable, thereby resulting in an improved balance between stiffness and impact properties.

As a first approximation, it can be said that the amount of the amorphous fraction AM corresponds to the amount of elastomeric polymer(s) (i.e. rubber) being present in the heterophasic polymer. The amount of the amorphous fraction is easy to measure as described further below in the Examples under the headline "Measuring Methods" and is frequently used as a parameter indicating the amount of elastomeric components within heterophasic, impact-modified compositions.

Another parameter frequently used to determine the amount of elastomeric and/or amorphous components within a polymer composition is the xylene cold soluble fraction XCS (sometimes also referred to as xylene solubles XS). The measuring method is described in further detail below under the headline "Measuring Methods". As a first approximation, the amount of the xylene cold soluble fraction XCS corresponds to the amount of rubber and the amount of those polymer chains of the matrix with low molecular weight and low stereoregularity. Thus, normally the XCS value is slightly higher than the AM value.

Preferably, according to the first aspect of the present invention the heterophasic polymer has a xylene cold soluble fraction $XCS_{total}$ in an amount of 3.0 to 8.5 wt%, and/or an amount of ethylene- and/or $C_{4-8}$ alpha-olefin-derived comonomer units of less than 2.0 wt%.

According to a second aspect of the present invention, the object outlined above is solved by providing a polymer composition, comprising

(a) a heterophasic polymer which comprises

(a1) a matrix comprising a propylene homopolymer and/or a propylene copolymer having an amount of comonomer units of less than 1.0 wt%, the matrix having a polydispersity index PI of 6 or less,
(a2) an elastomeric polypropylene which is dispersed within the matrix and comprises comonomer units derived from ethylene and/or a $C_{4-8}$ alpha-olefin,

the heterophasic polymer composition having a xylene cold soluble fraction $XCS_{total}$ in an amount of 3.0 to 8.5 wt%, and an amount of ethylene- and/or $C_{4-8}$ alpha-olefin-derived comonomer units of less than 2.0 wt%;

(b) talc in an amount of from 5 to 40 wt%.

Preferably, the heterophasic polymer composition according to the second aspect of the present invention has an amorphous fraction AM in an amount of 2.0 to 7.5 wt%, and/or the amorphous fraction AM has an amount of ethylene- and/or $C_{4-8}$ alpha-olefin-derived comonomer units of 20 to 45 wt%.

If not indicated otherwise, the following statements apply to the first aspect as well as to the second aspect of the present invention.

Preferably, the polymer composition comprises the heterophasic polymer in an amount of 50 wt% to 95 wt%. More preferably, the polymer composition comprises the heterophasic polymer in an amount of 65 wt% to 88 wt%, even more preferably 75 wt% to 85 wt%.

In the present invention, the term "matrix" is to be interpreted in its commonly accepted meaning, i.e. it refers to a continuous phase (in the present invention a continuous polymer phase) in which isolated or discrete particles such as rubber particles may be dispersed.

The matrix phase can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt% of the matrix, more preferably at least 90 wt%, even more preferably at least 95 wt% of the matrix are made of the propylene homo- and/or copolymer. Even further preferred, the matrix consists of the propylene homo- and/or copolymer.

In a preferred embodiment, the matrix only comprises the propylene homopolymer but does not comprise the propylene copolymer.

If present in the matrix, the propylene copolymer includes comonomer units derived from ethylene, $C_{4-8}$ alpha-olefins, or any mixture thereof. As indicated above, the propylene copolymer has an amount of comonomer units of less than 1.0 wt%, preferably less than 0.75 wt%, more preferably less than 0.5 wt%.

Preferably, the propylene homopolymer and/or the propylene copolymer of the matrix has/have an MFR(230°C, 2.16 kg) within the range of 0.1 g/10 min to 1.5 g/10 min, more preferably 0.2 g/10 min to 1.0 g/10 min, even more preferably 0.3 g/10 min to 0.5 g/10 min.

As indicated above, in addition to the propylene homo- and/or copolymer the matrix may optionally comprise further polymer(s) which can be blended homogeneously with the propylene homo and/or copolymer. Preferably, the matrix, either consisting of the propylene homo- and/or copolymer or optionally comprising one or more additional polymers, has an MFR(230°C, 2.16 kg) within the range of 0.1 g/10 min to 1.5 g/10 min, more preferably 0.2 g/10 min to 1.0 g/10 min, even more preferably 0.3 g/10 min to 0.5 g/10 min.

Of course, if the matrix consists of the propylene homo- or copolymer, preferably of the propylene homopolymer, the MFR value of the matrix corresponds to the MFR value of the polymer.

The propylene homo- or copolymer constituting the matrix can be either unimodal or multimodal such as bimodal. As used herein, the term "multimodal" is intended to cover polymers having at least two differently centred maxima along the x-axis of their molecular weight distribution curve as determined by gel permeation chromatography. In such a curve dW/d(logM) is plotted as ordinate against log (MW), where MW is molecular weight.

In a preferred embodiment, the propylene homo- and/or copolymer of the matrix has/have a polydispersion index PI of 4.5 or less. Preferably, the polydispersion index is from 1.5 to 6, more preferably from 2.5 to 4.5. The polydispersion index is a measure of the breadth of the molecular weight distribution. High PI values indicate a broad molecular weight distribution. Further details about the measuring method are provided below.

As indicated above, the propylene homo- and/or copolymer of the matrix can be multimodal, e.g. bimodal. If so, it is preferred that the high molecular weight fraction of the multimodal, preferably bimodal propylene homo- or copolymer of the matrix has an MFR(230°C, 10.0 kg) within the range of 0.1 g/10 min to 2.5 g/10 min, more preferably 0.5 g/10 min to 1.5 g/10 min, even more preferably 0.7 g/10 min to 1.5 g/10 min.

Preferably, the propylene homo- and/or copolymer of the matrix has/have a xylene cold soluble fraction $XCS_{PPmatrix}$ in an amount of less than 3.0 wt%, more preferably less than 2.0 wt%, even more preferably less than 1.5wt%.

As indicated above, in addition to the propylene homo- and/or copolymer, the matrix may optionally comprise further polymer(s) which can be blended homogeneously with the propylene homo- and/or copolymer. Preferably, the matrix, either consisting of the propylene homo- and/or copolymer or optionally comprising one or more additional polymers, has a xylene cold soluble fraction $XCS_{matrix}$ in an amount of less than 3.0 wt%, more preferably less than 2.0 wt%, even more preferably less than 1.5 wt%.

Of course, if the matrix consists of the propylene homo- or copolymer, preferably of the propylene homopolymer, as defined above, $XCS_{PPmatrix}$ and $XCS_{matrix}$ are identical. In case the matrix includes one or more additional polymers, which are homogeneously blended with the propylene homo- or copolymer as defined above, $XCS_{PPmatrix}$ and $XCS_{matrix}$ might slightly differ.

As indicated above, the heterophasic polymer further comprises an elastomeric polypropylene copolymer which is dispersed in the matrix and comprises comonomer units derived from ethylene and/or a $C_{4-8}$ alpha-olefin.

Within the present invention, it is possible that, in addition to the elastomeric polypropylene as defined above and in further detail below, the heterophasic polymer may comprise further elastomeric polymer components. However, it is preferred that the elastomeric polypropylene represents at least 80 wt%, more preferably at least 90 wt%, even more preferably at least 95 wt% of the total rubber content in the heterophasic polymer composition. In a preferred embodiment, the elastomeric polypropylene is the only dispersed elastomeric polymer which is present in the heterophasic polymer.

Preferably, the elastomeric polypropylene comprises ethylene-derived and/or $C_{4-8}$ alpha-olefin derived comonomer units, more preferably only ethylene-derived comonomer units. Preferably, these comonomer units are present in an amount of 20 wt% to 45 wt%, more preferably 22 wt% to 35 wt%, based on the weight of the elastomeric polypropylene.

In case the elastomeric polypropylene comprises comonomer units derived from a $C_{4-8}$ alpha-olefin, these are preferably selected from 1-butene, 1-hexene, 1-octene, or any mixture thereof.

As indicated above, the heterophasic polymer according to the first aspect of the present invention has an amorphous fraction AM in an amount of 2.0 to 7.5 wt%, and the amorphous fraction AM has an amount of ethylene- and/or $C_{4-8}$ alpha-olefin-derived comonomer units of 20-45 wt%

Preferably, the heterophasic polymer has an amorphous fraction AM in an amount of 3.0 wt% to 7.5 wt%, more preferably 3.0 wt% to 6.0 wt%. These preferred values apply to the heterophasic polymer according to the first and second aspect of the present invention.

Preferably, the amount of the ethylene- and/or $C_{4-8}$ alpha-olefin -derived comonomer units, more preferably the amount of ethylene-derived comonomer units in the amorphous fraction AM of the heterophasic polymer is from 22 wt% to 35 wt%, more preferably from 23 wt% to 32 wt%. These preferred values apply to the heterophasic polymer composition according to the first and second aspect of the present invention.

Preferably, the elastomeric polypropylene represents at least 60 wt%, more preferably at least 65 wt%, even more preferably at least 70 wt% of the amorphous fraction AM of the heterophasic polymer.

As indicated above with respect to the second aspect of the present invention, the heterophasic polymer has a xylene cold soluble fraction $XCS_{total}$ in an amount of 3.0 to 8.5 wt%, and an amount of ethylene- and/or $C_{4-8}$ alpha-olefin-derived comonomer units of less than 2.0 wt%.

Preferably, the heterophasic polymer has a xylene cold soluble fraction $XCS_{total}$ in an amount of 3.0 to 7.0 wt%, more preferably 4.0 to 7.0 wt%. These preferred values apply to the heterophasic polymer according to the first and second aspect of the present invention.

Preferably, the heterophasic polymer has an amount of ethylene- and/or $C_{4-8}$ alpha-olefin-derived comonomer units of less than 1.8 wt%, With respect to the lower limit, it is preferred that the heterophasic polymer composition has an amount of ethylene- and/or $C_{4-8}$ alpha-olefin-derived comonomer units of at least 0.8 wt%, more preferably at least 1.0 wt%. These preferred values apply to the heterophasic polymer according to the first and second aspect of the present invention.

Preferably, the elastomeric polypropylene represents at least 60 wt%, more preferably at least 65 wt% of the xylene cold soluble fraction $XCS_{total}$ of the heterophasic polymer.

Preferably, the amorphous fraction AM of the heterophasic polymer has an intrinsic viscosity within the range of 2.0 dl/g to 5.0 dl/g, more preferably 2.5 dl/g to 5.0 dl/g, even more preferably 3.0 dl/g to 4.5 dl/g.

As indicated above, the polymer composition of the first aspect as well as the polymer composition of the second aspect of the present invention contain talc in an amount of from 5 wt% to 40 wt%.

As commonly known, talc is a mineral composed of hydrated magnesium silicate. It is commercially available.

Preferably, the polymer composition comprises the talc in an amount of from 12 to 35 wt%, more preferably from 15 to 30 wt%, even more preferably from 15 wt% to 25 wt%.

For instance talc can be used having a particle size d95 of 50 micrometer or less, preferably 30 micrometer or less, measured by laser diffraction according to ISO 13320-1:1999. According to one specific embodiment talc can be used having a particle size d50 of 20 micrometer or less, preferably 15 micrometer or less, said talc preferably being further characterized by a specific surface according to BET measurement of more than 5 $m^2$/g, preferably more than 6 $m^2$/g.

In a preferred embodiment, the polymer composition satisfies the following relation:

$$TM > 2100\ MPa + 70\ x\ [A_{Talc}\ (MPa/wt\%) - XCS_{total}\ (MPa/wt\%)]$$

wherein

TM is the tensile modulus of the polymer composition in MPa,

$A_{Talc}$ is the amount of talc in the polymer composition in wt%,

$XCS_{total}$ is the xylene cold soluble fraction of the heterophasic polymer.

Preferably, the polymer composition has a tensile modulus of at least 2600 MPa, more preferably at least 2700 MPa.

Preferably, the polymer composition has a tensile modulus of at least 2700 MPa and a density of less than 1.1 $g/cm^3$.

According to another aspect, the present invention provides a pipe, comprising the polymer composition as defined above.

Preferably, the pipe is a non-pressure pipe such as a non-pressure sewage pipe. In other words, the pipe of the present invention is preferably used for the transport of non-pressurized fluids such as sewage.

Preferably, the pipe has a tensile modulus of more than 2600 MPa, more preferably more than 2700 MPa, wherein the tensile modulus is determined by the following formula:

$$\text{tensile modulus} = RS \times 12 \times [(D - t)/t]^3$$

wherein

RS is ring stiffness, determined according to EN ISO 9969,

D is the outer diameter of the pipe in mm, and

t is the wall thickness of the pipe in mm.

In general, the pipe can be manufactured by extrusion or injection moulding. Preferably, it is prepared by extrusion. A conventional plant for screw extrusion of polymer pipes comprises a single or double screw extruder, a nozzle, a calibrating device, cooling equipment, a pulling device, and a device for cutting or for coiling-up the pipe. The polymer is extruded into a pipe from the extruder.

The heterophasic polymer as defined above can be prepared by a process comprising the following steps:

(i) preparing the propylene homo- or copolymer as defined above in at least one loop reactor and optionally in at least one gas phase reactor, and

(ii) transferring the propylene homo- or copolymer to at least one gas phase reactor and preparing the elastomeric polypropylene as defined above in the presence of the propylene homo- or copolymer.

Preferably, the temperature of the loop reactor is at least 80°C and the pressure is at least 4600-10000 kPa.

In a preferred embodiment, step (i) comprises a loop and a gas-phase reactor in a cascade. Preferably, the loop reactor operates in liquid propylene and at a high polymerization temperature of at least 80°C, most preferably at supercritical temperature and pressure conditions.

The term "supercritical" conditions means that both the temperature and the pressure in the reactor are above the corresponding supercritical temperature and pressure of the reaction medium. For a reaction medium of propylene this means a temperature of at least 92°C and a pressure of at least 4600 kPa. Preferred temperatures are in the range of 92-110 °C. Preferred pressures are in the range 4600-10000 kPa, more preferably 5000-7000 kPa.

If step (i) comprises a gas-phase reactor, it is preferably operated at a temperature of 50-115°C, more preferably 60-110°C, even more preferably 80-105°C and a pressure of 500-5000 kPa, more preferably 1500-3500 kPa. Preferably, when the loop polymerization step of step (i) is carried out at surpercritical conditions, the temperature of the gas-phase reactor is 85-95°C and the pressure is 2000-3000 kPa.

The production ratio by weight (the so-called "split") between the loop reactor and the gas-phase reactor of step (i) may be from 20:80 to 80:20, more preferably 30:70 to 70:30, even more preferably 40:60 to 60:40.

The gas-phase reactor(s) of step (i), if used, may be any ordinary fluidised bed reactor, although other types of gas-phase reactors can be used.

After having prepared in step (i) the propylene homo- or copolymer constituting the matrix, the product of step (i) is transferred to a gas phase reactor where the elastomeric polypropylene is prepared in the presence of the propylene homo- or copolymer and *in situ* dispersed therein (so-called "reactor blending"). Optionally, step (ii) may comprise one or more additional gas phase reactors provided in serial configuration.

As a catalyst for the polymerization in step (i) and/or step (ii), any stereospecific catalyst for propylene polymerization can be used, which is capable of catalysing polymerization and copolymerization of propylene and comonomers, preferably at a pressure of 500-10000 kPa, in particular 2500-8000 kPa, and at a temperature of 40-110°C, in particular 60-110°C. Preferably, the catalyst comprises a Ziegler-Natta-type catalyst which can be used at high polymerization temperatures of 80°C or more.

Generally, the Ziegler-Natta catalyst used in the present invention comprises a catalyst component, a cocatalyst component, an external donor, the catalyst component of the catalyst system primarily containing magnesium, titanium, halogen and an internal donor. Electron donors control the stereospecific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds, titanium trichloride and titanium tetrachloride being particularly preferred.

It is preferred to use catalysts which can withstand the high temperatures prevailing in the loop reactor. The conventional Ziegler-Natta catalysts for isotactic polymerization of propylene generally have an operating temperature limit of around 80°C, above which they either become deactivated or lose their stereoselectivity. This low polymerization temperature may put a practical limit on the heat removal efficiency of the loop reactor.

One preferred catalyst to be used according to the invention is disclosed in EP 0 591 224 which discloses a method for preparing a procatalyst composition from magnesium dichloride, a titanium compound, a lower alcohol and an ester of phthalic acid containing at least five carbon atoms. According to EP 0 591 224, a transesterification reaction is carried out at an elevated temperature between the lower alcohol and the phthalic acid ester, whereby the ester groups from the lower alcohol and the phthalic ester change places.

Magnesium dichloride can be used as such or it can be combined with silica, e.g. by absorbing the silica with a solution or slurry containing magnesium dichloride. The lower alcohol used may preferably be methanol or ethanol, particularly ethanol.

The titanium compound used in the preparation of the procatalyst is preferably an organic or inorganic titanium compound, which is at the oxidation state of 3 or 4. Also other transition metal compounds, such as vanadium, zirconium, chromium, molybdenum and tungsten compounds can be mixed with the titanium compound. The titanium compound usually is a halide or oxyhalide, an organic metal halide, or a purely metal organic compound in which only organic ligands have been attached to the transition metal. Particularly preferred are the titanium halides, especially titanium tetrachloride.

The alkoxy group of the phthalic acid ester used comprises at least five carbon atoms, preferably at least eight carbon atoms. Propylhexyl phthalate, dioctyl phthalate, diisodecyl phthalate and ditridecyl phthalate may be used. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the procatalyst composition, transesterifies the catalyst at an elevated temperature. It is preferred to carry out the transesterification at a temperature which is 110-150°C, preferably 120-140°C.

The catalyst can also be modified as described in EP 1 028 985.

The catalyst prepared by the method above is used together with an organometallic cocatalyst and with an external donor. Generally, the external donor has the formula

$$R_nR'_mSi(R"O)_{4-n-m}$$

wherein
R and R' can be the same or different and represent a linear, branched or cyclic aliphatic, or aromatic group; R" is methyl or ethyl;
n is an integer of 0 to 3;
M is an integer of 0 to 3; and
n+m is 1 to 3.

In particular, the external donor is selected from the group consisting of cyclohexyl methylmethoxysilane (CHMMS), dicyclopentyl dimethoxysilane (DCPDMS), diisopropyl dimethoxysilane, di-isobutyl dimethoxysilane, and di-t-butyl dimethoxysilane.

An organoaluminium compound is used as a cocatalyst. The organoaluminium compound is preferably selected from the group consisting of trialkyl aluminium, dialkyl aluminium chloride and alkyl aluminium sesquichloride.

In a preferred embodiment, step (ii) is carried out in the presence of a compound selected from a glycerol ester, an ethoxylated amine, an ethoxylated amide, carbon monoxide, or any combination thereof.

As these compounds may decrease catalyst activity, they can be used to lower the amount of rubber produced in step (ii).

As an example, reference can be made to Grindsted PS 432 from Danisco, which is a glycerol ester compound.

The talc can be added to the heterophasic polymer by any appropriate mixing/blending method commonly known to the skilled person. As an example, mixing can be accomplished by adding the talc to the polymer melt in an extruder.

According to a further aspect, the present invention provides the use of the polymer composition as described above for the preparation of a pipe, preferably a non-pressure pipe.

The present invention will now be described in further detail by making reference to the examples provided below.

**Examples**

**I. Measuring methods**

If not otherwise indicated, the measuring methods described below are used for all parameters already outlined above when defining the present invention.

**1. Melt flow rate MFR**

Melt flow rate was measured according to ISO 1133, either at 230°C and 2.16 kg (MFR2.16kg/230°C) or at 230°C and 10 kg (MFR10kg/230°C).

**2. Intrinsic viscosity IV**

The intrinsic viscosity of the amorphous fraction was measured according to ISO 1628 in decahydronaphtalene (decalin) at 135°C .

**3. Tensile modulus**

**3.1 Tensile modulus measured on injection moulded samples**

Tensile modulus was determined according to ISO 527-2/1 B at 1 mm/min. and 23°C. To determine stress at yield and strain at yield, a speed of 50 mm/min. was used. Tensile modulus was determined on 4 mm thick test specimens according to ISO 527-2/1B. The injection moulded test specimens are made in a positive mould according to ISO 1873-2, multipurpose specimen.

**4. Polydispersion Index PI**

The polydispersion index PI is calculated according to the following equation:

$$PI = 10^5 \ Pa/Gc$$

wherein Gc in Pa is the cross over modulus at which G'=G"=Gc.

The rheology measurements have been made according to ISO 6721-10. Measurements were made at and 200°C. G' and G" indicate storage modulus and loss modulus, respectively. Measurements were made on a Physica MCR 501 rheometer with a plate-plate fixture, plate diameter 25 mm, and a distance between the plates of 1.3 mm.

**5. Charpy notched impact strength**

Charpy impact strength was determined according to ISO 179/1eA on injection molded test specimens made according to ISO 1873. The dimension of the test specimen was 80x10x4 mm.

**6. Xylene cold soluble fraction XCS, amorphous fraction AM**

XCS and AM were determined as follows:

2.0 g of polymer was dissolved in 250 ml p-xylene at 135°C under agitation. After $30\pm2$ minutes the solution was allowed to cool for 15 minutes at ambient temperature and then allowed to settle for 30 minutes at $25\pm0.5$°C. The solution was filtered with filter paper into two 100 ml flasks.

The solution from the first 100 ml vessel was evaporated in nitrogen flow and the residue dried under vacuum at 90°C until constant weight is reached.

XS%=(100 x ml x v0) / (m0 x v1), wherein
m0= initial polymer amount (g)
m1= weight of residue (g)
v0= initial volume (ml)
v1= volume of analyzed sample (ml)

The amorphous content (AM) is measured by separating the above xylene cold soluble fraction and precipitating the amorphous part with acetone. The precipitate was filtered and dried in a vacuum oven at 90°C.

AM%=(100 x m1 x v0) / (m0 x v1), wherein
m0= initial polymer amount (g)
m1= weight of precipitate (g)
v0= initial volume (ml)
v1= volume of analyzed sample (ml)

**7. Comonomer content**

Measurement of the comonomer content (wt%) was based on Fourier transform infrared spectroscopy (FTIR) determination calibrated with $^{13}$C-NMR.

**8. Density**

Density was determined according to ISO 1183.

**II. Examples E1-E3 and CE1-CE3**

In Examples E1-E3, a heterophasic polymer was used which complies with the requirements of the present invention (in the following referred to as Polymer A). In Comparative Examples CE1-CE3, a heterophasic polymer was used which does not comply with these requirements of the present invention (in the following referred to as Polymer B).
The propylene polymers were prepared in the presence of a Ziegler-Natta catalyst which had been prepared according to Example 2 of WO 00/68315.
In both heterophasic polymers A and B, the matrix is made of a propylene homopolymer which was prepared in a loop reactor and a gas phase reactor (GPR1). Further information about the propylene homopolymer constituting the matrix is shown in Table 1.
Subsequently, the propylene homopolymer was transferred to a second gas phase reactor (GPR2) where the elastomeric polypropylene was prepared.
Further information about the process parameters is provided in Table 1.
Further information about the properties of the heterophasic polymers to which talc is subsequently added is provided in Table 2.

Table 1: Process parameters

|  | Polymer A | Polymer B |
|---|---|---|
| **Prepolymerisation** |  |  |
| Temperature (°C) | 30 | 30 |
| Hydrogen feed (g/h) |  |  |
| **Loop reactor** |  |  |
| Temperature (°C) | 85 | 85 |
| Pressure (kPa) | 5500 | 5500 |
| H2/C3 ratio (mol/kmol) |  |  |
| MFR10 (g/10 min) | 0,8 | 0,8 |
| **Gas phase reactor 1** |  |  |

(continued)

|  | Polymer A | Polymer B |
|---|---|---|
| Temperature (°C) | 90 | 90 |
| Pressure (kPa) | 2500 | 2500 |
| H2/C3 ratio (mol/kmol) |  |  |
| MFR2 (g/10 min) | 0,3 | 0,3 |
| **Gas phase reactor 2** |  |  |
| Temperature (°C) | 80 | 80 |
| Pressure (kPa) | 2000 | 2000 |
| C2/C3 ratio (mol/kmol) |  | 550 |
|  |  |  |
|  |  |  |

Table 2: Properties of the heterophasic polymers

|  | Polymer A | Polymer B |
|---|---|---|
|  |  |  |
| MFR2 (g/10 min) | 0,3 | 0.25 |
| Intrinsic Viscosity(dl/g)) |  | 3.5 |
| XS (w%) | 6,1 | 11 |
| Ethene content (%) | 1,5 | 5.1 |
| AM (w%) |  | 12 |
| Ethene of AM (%) | 31,1 | 33 |
| Intrinsic Viscosity of AM (dl/g) |  | 3.5 |
| Polydispersion index PI | 3.7 | 4.7 |
| Stress at yield (MPa) | 37,9 | 31.9 |
| Strain at yield (%) |  | 8.5 |
| Strain at break (%) | 6,6 | 58 |
| Tensile modulus (MPa) | 2047 | 1685 |
| Charpy notched, 23°C (kJ/m2) | 29 | 68 |
| Charpy notched, 0°C (kJ/m2) | 4,6 | 14 |

As shown in Table 2, the heterophasic polymer A has a tensile modulus which is higher than the one of the heterophasic polymer B. On the other hand, the polymer B has better impact properties.

To these heterophasic polymers, talc was then added in different amounts by compounding via a twin screw extruder TSE prism 24 under consistent processing conditions (450 rpm, temperature profile: 190->200->6x215->2x210°C).

The talc used was the commercial product Mistron 75-6 A of Luzenac having a particle size d95 of 25.6 $\mu$m and a particle size d50 of 8.2 $\mu$m, both measured by laser diffraction (Malvern Mastersizer) according to ISO 13320-1: 1999, and a specific surface according to BET measurement of 8.0 $m^2$/g.

Properties of the final polymer composition are summarized in Table 3.

Table 3: Properties of the final polymer compositions containing different amounts of talc

| | E1 | E2 | E3 | CE1 | CE2 | CE3 |
|---|---|---|---|---|---|---|
| Amount of talc added (wt%) | 15 | 20 | 25 | 15 | 20 | 25 |
| Tensile Modulus (MPa) | 2788 | 3157 | 3506 | 2179 | 2630 | 2909 |
| E-modulus increase compared to used base polymer | 808 | 1110 | 1525 | 513 | 945 | 1243 |
| Charpy, notched, +23°C (kJ/m2) | 8.5 | 6.3 | 4 | 6.9 | 6.1 | 4.5 |
| Charpy, notched 0°C (kJ/m2) | 4.3 | 3 | 2.6 | 4.2 | 3.5 | 3.6 |
| Density | | 1051,7 | | | 1048,5 | |

The data of Table 3 demonstrate that for both heterophasic polymers tensile modulus of the final polymer composition increases with increasing amounts of added talc. However, if the heterophasic polymer to which the talc is added complies with the definition of the present invention, a significantly higher value of tensile modulus is obtained at the same amount of talc. In other words, if a heterophasic polymer is used which complies with the definition of the present invention, significantly less talc is needed to realize tensile modulus values comparable to those of PVC-based materials, e.g. 2700 MPa or even higher, which is favourable in many ways: Surface quality is improved, welding is improved, pressure resistance is improved, density of the compound is less which means less weight per meter pipe, compounding is easier, energy consumption during pipe production and risk for degradation decrease. The samples comprising the heterophasic polymer which complies with the definition of the present invention (see samples E1 to E3) surprisingly show a less pronounced decrease in impact strength if compared to samples CE1 to CE3, thereby resulting in an improved balance between stiffness and impact properties.

**Claims**

1. A polymer composition, comprising

   (a) a heterophasic polymer which comprises

      (a1) a matrix comprising a propylene homopolymer and/or a propylene copolymer having an amount of comonomer units of less than 1.0 wt%, the matrix having a polydispersity index PI of 6 or less,
      (a2) an elastomeric polypropylene which is dispersed within the matrix and comprises comonomer units derived from ethylene and/or a $C_{4-8}$ alpha-olefin,

   the heterophasic polymer composition having an amorphous fraction AM in an amount of 2.0 to 7.5 wt%, and the amorphous fraction AM having an amount of ethylene- and/or $C_{4-8}$ alpha-olefin-derived comonomer units of 20 to 45 wt%,
   (b) talc in an amount of from 5 wt% to 40 wt%.

2. The polymer composition according to claim 1, wherein the heterophasic polymer has a xylene cold soluble fraction $XCS_{total}$ in an amount of 3.0 to 8.5 wt%, and/or an amount of ethylene- and/or $C_{4-8}$ alpha-olefin-derived comonomer units of less than 2.0 wt%.

3. A polymer composition, comprising

   (a) a heterophasic polymer which comprises

      (a1) a matrix comprising a propylene homopolymer and/or a propylene copolymer having an amount of comonomer units of less than 1.0 wt%, the matrix having a polydispersity index PI of 6 or less,
      (a2) an elastomeric polypropylene which is dispersed within the matrix and comprises comonomer units derived from ethylene and/or a $C_{4-8}$ alpha-olefin,

   the heterophasic polymer composition having a xylene cold soluble fraction $XCS_{total}$ in an amount of 3.0 to 8.5 wt%, and an amount of ethylene- and/or $C_{4-8}$ alpha-olefin-derived comonomer units of less than 2.0 wt%;

(b) talc in an amount of from 5 wt% to 40 wt%.

4. The polymer composition according to claim 3, wherein the heterophasic polymer has an amorphous fraction AM in an amount of 2.0 to 7.5 wt%, and the amorphous fraction AM having an amount of ethylene- and/or $C_{4-8}$ alpha-olefin-derived comonomer units of 20 to 45 wt%.

5. The polymer composition according to one of the preceding claims, comprising the heterophasic polymer in an amount of from 50 wt% to 95 wt%.

6. The polymer composition according to one of the preceding claims, wherein the matrix of the heterophasic polymer has a xylene cold soluble fraction $XCS_{matrix}$ in an amount of less than 3.0 wt%, more preferably less than 2.0 wt%, even more preferably less than 1.5 wt%.

7. The polymer according to one of the preceding claims, wherein the matrix of the heterophasic polymer has a polydispersity index PI of 4.5 or less.

8. The polymer composition according to one of the preceding claims, wherein the amount of the amorphous fraction AM in the heterophasic polymer is from 3.0 wt% to 7.5 wt%, more preferably 3.0 wt% to 6.0 wt%.

9. The polymer composition according to one of the preceding claims, wherein the amount of ethylene-derived comonomer units in the amorphous fraction AM of the heterophasic polymer is from 22 wt% to 35 wt%, more preferably from 23 wt% to 32 wt%.

10. The polymer composition according to one of the preceding claims, wherein the amount of the xylene cold soluble fraction $XCS_{total}$ in the heterophasic polymer is from 3.0 wt% to 7.0 wt%, more preferably 4.0 wt% to 7.0 wt%.

11. The polymer composition according to one of the preceding claims, wherein the amount of ethylene-derived comonomer units in the heterophasic polymer is from 0.8 wt% to less than 2.0 wt%, more preferably from 1.0 wt% to 1.8 wt%.

12. The polymer composition according to one of the preceding claims, comprising the talc in an amount of from 12 to 35 wt%.

13. The polymer composition according to one of the preceding claims, satisfying the following relation:

$$TM > 2100 \text{ MPa} + 70 \times [A_{Talc} \text{ (MPa/wt\%)} - XCS_{total} \text{ (MPa/wt\%)}]$$

wherein
TM is the tensile modulus of the polymer composition in MPa,
$A_{Talc}$ is the amount of talc in the polymer composition in wt%,
$XCS_{total}$ is the xylene cold soluble fraction of the heterophasic polymer.

14. The polymer composition according to one of the preceding claims, having a tensile modulus of at least 2700 MPa.

15. The polymer composition according to one claim 14, having a density of less than 1.1 g/cm$^3$.

16. A pipe, comprising the polymer composition according to one of the claims 1 to 15.

**Patentansprüche**

1. Polymer-Zusammensetzung, umfassend

(a) ein heterophasisches Polymer, das umfasst

(a1) eine Matrix, umfassend ein Propylen-Homopolymer und/oder ein Propylen-Copolymer mit einer Menge an Comonomer-Einheiten von weniger als 1,0 Gew.-%, wobei die Matrix einen Polydispersitäts-Index PI von 6 oder weniger aufweist,

(a2) ein elastomeres Polypropylen, das in der Matrix dispergiert ist und Comonomer-Einheiten, abgeleitet von Ethylen und/oder einem $C_{4-8}$ alpha-Olefin, umfasst,

wobei die heterophasische Polymer-Zusammensetzung eine amorphe Fraktion AM in einer Menge von 2,0 bis 7,5 Gew.-% aufweist, und die amorphe Fraktion AM eine Menge an Ethylen- und/oder $C_{4-8}$ alpha-Olefin-abgeleiteten Comonomer-Einheiten von 20 bis 45 Gew.-% aufweist,

(b) Talkum in einer Menge von 5 Gew.-% bis 40 Gew.-%.

**2.** Polymer-Zusammensetzung nach Anspruch 1, worin das heterophasische Polymer eine in kaltem Xylol lösliche Fraktion $XCS_{gesamt}$ in einer Menge von 3,0 bis 8,5 Gew.-%, und/oder einer Menge von Ethylen- und/oder $C_{4-8}$ alpha-Olefin-abgeleiteten Comonomer-Einheiten von weniger als 2,0 Gew.-% aufweist.

**3.** Polymer-Zusammensetzung, umfassend

(a) ein heterophasisches Polymer, das umfasst

(a1) eine Matrix, umfassend ein Propylen-Homopolymer und/oder ein Propylen-Copolymer mit einer Menge an Comonomer-Einheiten von weniger als 1,0 Gew.-%, wobei die Matrix einen Polydispersitäts-Index PI von 6 oder weniger aufweist,

(a2) ein elastomeres Polypropylen, das in der Matrix dispergiert ist und Comonomer-Einheiten, abgeleitet von Ethylen und/oder einem $C_{4-8}$ alpha-Olefin, umfasst,

wobei die heterophasische Polymer-Zusammensetzung eine in kaltem Xylol lösliche Fraktion $XCS_{gesamt}$ in eine Menge von 3,0 bis 8,5 Gew.-%, und einer Menge an Ethylen- und/oder $C_{4-8}$ alpha-Olefin-abgeleiteten Comonomer-Einheiten von weniger als 2,0 Gew.-% aufweist;

(b) Talkum in einer Menge von 5 Gew.-% bis 40 Gew.-%.

**4.** Polymer-Zusammensetzung nach Anspruch 3, worin das heterophasische Polymer eine amorphe Fraktion AM in einer Menge von 2,0 bis 7,5 Gew.-% aufweist, und die amorphe Fraktion AM eine Menge an Ethylen- und/oder $C_{4-8}$ alpha-Olefin-abgeleiteten Comonomer-Einheiten von 20 bis 45 Gew.-% aufweist.

**5.** Polymer-Zusammensetzung nach einem der vorangehenden Ansprüche, umfassend das heterophasische Polymer in einer Menge von 50 Gew.-% bis 95 Gew.-%.

**6.** Polymer-Zusammensetzung nach einem der vorangehenden Ansprüche, worin die Matrix des heterophasischen Polymers eine in kaltem Xylol lösliche Fraktion $XCS_{Matrix}$ in einer Menge von weniger als 3,0 Gew.-%, bevorzugter weniger als 2,0 Gew.-%, stärker bevorzugt weniger als 1,5 Gew.-%, aufweist.

**7.** Polymer nach einem der vorangehenden Ansprüche, worin die Matrix des heterophasischen Polymers einen Polydispersitäts-Index PI von 4,5 oder weniger aufweist.

**8.** Polymer-Zusammensetzung nach einem der vorangehenden Ansprüche, worin die Menge der amorphen Fraktion AM in dem heterophasischen Polymer von 3,0 Gew.-% bis 7,5 Gew.-%, bevorzugter 3,0 Gew.-% bis 6,0 Gew.-%, ist.

**9.** Polymer-Zusammensetzung nach einem der vorangehenden Ansprüche, worin die Menge an Ethylen-abgeleiteten Comonomer-Einheiten in der amorphen Fraktion AM des heterophasischen Polymers von 22 Gew.-% bis 35 Gew.-%, bevorzugter von 23 Gew.-% bis 32 Gew.-%, ist.

**10.** Polymer-Zusammensetzung nach einem der vorangehenden Ansprüche, worin die Menge von der in kaltem Xylol löslichen Fraktion $XCS_{gesamt}$ in dem heterophasischen Polymer von 3,0 Gew.-% bis 7,0 Gew.-%, bevorzugter 4,0 Gew.-% bis 7,0 Gew.-%, ist.

**11.** Polymer-Zusammensetzung nach einem der vorangehenden Ansprüche, worin die Menge an Ethylen-abgeleiteten Comonomer-Einheiten in dem heterophasischen Polymer von 0,8 Gew.-% bis weniger als 2,0 Gew.-%, bevorzugter von 1,0 Gew.-% bis 1,8 Gew.-%, ist.

**12.** Polymer-Zusammensetzung nach einem der vorangehenden Ansprüche, umfassend das Talkum in einer Menge von 12 bis 35 Gew.-%.

**13.** Polymer-Zusammensetzung nach einem der vorangehenden Ansprüche, die der nachstehenden Beziehung genügt:

$$TM > 2100 \text{ MPa} + 70 \times [A_{Talkum} \text{ (MPa/Gew.-\%)} - XCS_{gesamt} \text{ (MPa/Gew.-\%)}]$$

worin
TM der Zug-Modul der Polymer-Zusammensetzung in MPa ist,
$A_{Talkum}$ die Menge an Talkum in der Polymer-Zusammensetzung in Gew.-% ist,
$XCS_{gesamt}$ die in kaltem Xylol lösliche Fraktion des heterophasischen Polymers ist.

**14.** Polymer-Zusammensetzung nach einem der vorangehenden Ansprüche, mit einem Zug-Modul von mindestens 2700 MPa.

**15.** Polymer-Zusammensetzung nach Anspruch 14, mit einer Dichte von weniger als 1,1 g/cm$^3$.

**16.** Rohr, umfassend die Polymer-Zusammensetzung nach einem der Ansprüche 1 bis 15.

**Revendications**

**1.** Composition de polymère comprenant :

(a) un polymère hétérophasique qui comprend

(a1) une matrice comprenant un homopolymère de propylène et/ou un copolymère de propylène présentant une teneur en motifs comonomères inférieure à 1,0 % en poids, la matrice présentant un indice de polydispersité PI de 6 ou moins,
(a2) un polypropylène élastomère qui est dispersé à l'intérieur de la matrice et comprend des motifs comonomères dérivés d'éthylène et/ou d'une $\alpha$-oléfine en $C_4$ à $C_8$,

la composition de polymère hétérophasique présentant une fraction amorphe AM en une quantité de 2,0 à 7,5 % en poids, la fraction amorphe AM comportant une quantité de motifs comonomères dérivés d'éthylène et/ou d'$\alpha$-oléfine en $C_4$ à $C_8$ de 20 à 45 % en poids,
(b) du talc en une quantité de 5 % en poids à 40 % en poids.

**2.** Composition de polymère selon la revendication 1, dans laquelle le polymère hétérophasique présente une fraction soluble dans le xylène froid $XCS_{total}$ correspondant à une quantité de 3,0 à 8,5 % en poids, et/ou une quantité de motifs comonomères dérivés d'éthylène et/ou d'$\alpha$-oléfine en $C_4$ à $C_8$ inférieure à 2,0 % en poids.

**3.** Composition de polymère comprenant

(a) un polymère hétérophasique qui comprend

(a1) une matrice comprenant un homopolymère de propylène et/ou un copolymère de propylène présentant une teneur en motifs comonomères inférieure à 1,0 % en poids, la matrice présentant un indice de polydispersité PI de 6 ou moins,
(a2) un polypropylène élastomère qui est dispersé à l'intérieur de la matrice et comprend des motifs comonomères dérivés d'éthylène et/ou d'une $\alpha$-oléfine en $C_4$ à $C_8$,

la composition de polymère hétérophasique présentant une fraction soluble dans le xylène froid $XCS_{total}$ cor-respondant à une quantité de 3,0 à 8,5 % en poids, et une quantité de motifs comonomères dérivés d'éthylène et/ou d'$\alpha$-oléfine en $C_4$ à $C_8$ inférieure à 2,0 % en poids ;
(b) du talc en une quantité de 5 % en poids à 40 % en poids.

**4.** Composition de polymère selon la revendication 3, dans laquelle le polymère hétérophasique présente une fraction amorphe AM en une quantité de 2,0 à 7,5 % en poids, la fraction amorphe AM comportant une quantité de motifs comonomères dérivés d'éthylène et/ou d'α-oléfine en C$_4$ à C$_8$ de 20 à 45 % en poids,

**5.** Composition de polymère selon l'une des revendications précédentes, comprenant le polymère hétérophasique en une quantité de 50 % en poids à 95 % en poids.

**6.** Composition de polymère selon l'une des revendications précédentes, dans laquelle la matrice du polymère hétérophasique présente une fraction soluble dans le xylène froid XCS$_{matrix}$ correspondant à une quantité inférieure à 3,0 % en poids, plus préférablement inférieure à 2,0 % en poids, encore plus préférablement inférieure à 1,5 % en poids.

**7.** Composition de polymère selon l'une des revendications précédentes, dans laquelle la matrice du polymère hétérophasique présente un indice de polydispersité PI de 4,5 ou moins.

**8.** Composition de polymère selon l'une des revendications précédentes, dans laquelle la quantité de la fraction amorphe AM dans le polymère hétérophasique est de 3,0 % en poids à 7,5 % en poids, plus préférablement de 3,0 % en poids à 6,0 % en poids.

**9.** Composition de polymère selon l'une des revendications précédentes, dans laquelle la quantité de motifs comonomères dérivés d'éthylène dans la fraction amorphe AM du polymère hétérophasique est de 22 % en poids à 35 % en poids, plus préférablement de 23 % en poids à 32 % en poids.

**10.** Composition de polymère selon l'une des revendications précédentes, dans laquelle la quantité de la fraction soluble dans le xylène froid XCS$_{total}$ dans le polymère hétérophasique est de 3,0 % en poids à 7,0 % en poids, plus préférablement de 4,0 % en poids à 7,0 % en poids.

**11.** Composition de polymère selon l'une des revendications précédentes, dans laquelle la quantité de motifs comonomères dérivés d'éthylène dans le polymère hétérophasique est de 0,8 % en poids à moins de 2,0 % en poids, plus préférablement de 1,0 % en poids à 1,8 % en poids.

**12.** Composition de polymère selon l'une des revendications précédentes, comprenant le talc en une quantité de 12 à 35 % en poids.

**13.** Composition de polymère selon l'une des revendications précédentes, satisfaisant à la relation suivante :

$$TM > 2100\ MPa + 70\ x\ [A_{talc}\ (MPa/\%pds) - XCS_{total}\ (MPa/\%pds)]$$

dans laquelle
Tm est le module en traction de la composition de polymère en MPa,
A$_{talc}$ est la quantité de talc dans la composition de polymère en % en poids
XCS$_{total}$ est la fraction soluble dans le xylène froid du polymère hétérophasique.

**14.** Composition de polymère selon l'une des revendications précédentes, qui présente un module en traction d'au moins 2700 MPa.

**15.** Composition de polymère selon la revendication 14, présentant une masse volumique inférieure à 1,1 g/cm$^3$.

**16.** Tuyau comprenant la composition de polymère selon l'une des revendications 1 à 15.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1632529 A1
- EP 2145923 A1
- WO 2005014713 A
- WO 2006114358 A2
- EP 0591224 A
- EP 1028985 A
- WO 0068315 A